# EUROPEAN PATENT APPLICATION

(11) **EP 2 869 167 A1**
(43) Date of publication of application: **06.05.2015**
(21) Application number: 13808649.1
(22) Date of filing: 16.05.2013
(51) Int. Cl.: G06F 3/041, G06F 3/048, G06F 3/0488, H04M 1/00, H04M 1/247

(54) **PROCESSING DEVICE, OPERATION CONTROL METHOD, AND PROGRAM**

(30) Priority: 28.06.2012 JP 2012145208
(71) Applicant: NEC CASIO Mobile Communications, Ltd., Kawasaki-shi, Kanagawa 211-8666 (JP)
(72) Inventor: UNO, Hiroyuki, Kawasaki-shi Kanagawa 211-8666 (JP)
(74) Representative: Vossius & Partner Patentanwälte Rechtsanwälte mbB
(86) International application number: PCT/JP2013/063650
(87) International publication number: WO 2014/002633

(57) **Abstract**

The processing device includes: input detecting unit 1 that detects an operated position by an operating means; and, controller 2 that divides input detecting unit 1 into a plurality of regions and controls the operation of the processing device based on the change of the operated position in the plural regions.

## Description

### Technical Field

The present invention relates to a processing device for performing operations in accordance with control by a control means and an operation control method for same.

### Background Art

At present, mobile phones have been becoming an indispensable tool for everyday life in terms of information exchange and information collection. At the time when mobile phones emerged in the world, most of them only had a calling function. However, in recent years, mobile phones have evolved to be able to transmit emails and access the Internet, like general personal computers.

On the market of such mobile phones, in recent years smartphones have rapidly become popular. The smartphone does not have any keypad but has a touch pad that detects a touch on the display screen, and can select and/or control the same point on the display screen with that at which a touch has been detected on the touch pad. The information processing device having such a touch pad has also been by digital cameras, portable game machines, etc., not limited to smartphones, whereby icons for application on the display screen, links of the browser, selection of keys for text input, scrolling, and enlarging/reducing can be intuitively known and easily operated.

Since operation of a processing device with a touch pad can be controlled by touching the touch pad provided on the display screen in this way, there is a risk of causing malfunction by unintentional touch to the touch pad. To address this problem, the common approach is to use an anti-malfunction lock mechanism that will prevent malfunctions from occurring in order to ensure that any unintentional touch is not regarded as an intentional command.

As a method of releasing the locked state, for example another input device different from the touch to the touch pad is used to temporarily activate the detecting function of the touch pad so as to allow for input of the predetermined information within a predetermined period of time and thereby perform unlocking based on the propriety of the input information (see Patent Document 1, for example). However, release of the locked state requires an operating action every time the processing device is used, so that this action is preferred to be as simple as possible without degrading user convenience.

As one example of a simplified method for releasing the locked state, there is a means whereby the locked state is unlocked by a contact action such as a touch to a predetermined index while the touch pad has been temporarily activated. However, the more simplified the release of the locked state, the more often an unintentional release of the locked state is likely to occur.

Another method for unlocking the locked state involves using a continuous action such as moving a certain icon from the first position to the second position. However, this method needs a touch and drag action, hence if the input device temporarily comes off the touch pad partway during dragging, the contact state may not be recognized. As a result, the touch and drag action from the first position has to be repeated.

In this connection, there have been considered technologies in which the touch pad is divided into a plurality of regions and a touch operation onto an arbitrary region among the plural regions causes the display corresponding to the region to be changed (see Patent Document 2, for example).

### Related Art Documents

### Patent Documents

Patent Document 1: JP2007-257140A
Patent Document 2: JP2008-250804A

### Summary of the Invention

### Problems to be solved by the Invention

However, in the above technology in which the touch pad is divided into a plurality of regions so that a touch operation onto an arbitrary region among the plural regions causes the display corresponding to the region to be changed, and the display corresponding to the regions to which the touch operation has been done is changed all at once after the entire touch operation has been completed. Accordingly, when this technology is applied to release of the locked state and if the continuous touching operation on the touch pad to release the locked state is temporarily suspended, it is impossible to identify the point in time from where the touch operation should be continued, hence the touch operation has to be repeated.

Since the present invention has been devised with the above described technologies in mind, it is therefore an object of the present invention to provide a processing device, operation control method and program that, even if a continuous operation by an operating means is temporarily suspended, will enable recognition of the point in time from where the operation should be continued.

### Means for Solving the Problems

The invention to achieve the above object includes:
an input detecting means that detects an operated position by an operating means; and,
a control means that divides the input detecting means into a plurality of regions and controls the operation of the processing device based on the change of the operated position in the plural regions.

The invention further includes:
an input and detection step of detecting an operated position by an operating means in an input detecting means; and,
a control step of controlling the operation of the processing device based on the change of the operated position in the plural regions into which the input detecting means is divided.

The invention is a program that causes a computer to execute:
an input and detection step of detecting an operated position by an operating means in an input detecting means; and,
a control step of controlling the operation of the processing device based on the change of the operated position in the plural regions into which the input detecting means is divided.

### Effect of the Invention

According to the present invention, when a continuous operation by the operating means was temporarily interrupted in the course of the operation, it is possible to identify the point of time from which the operation should be continued.

### Brief Description of the Drawings

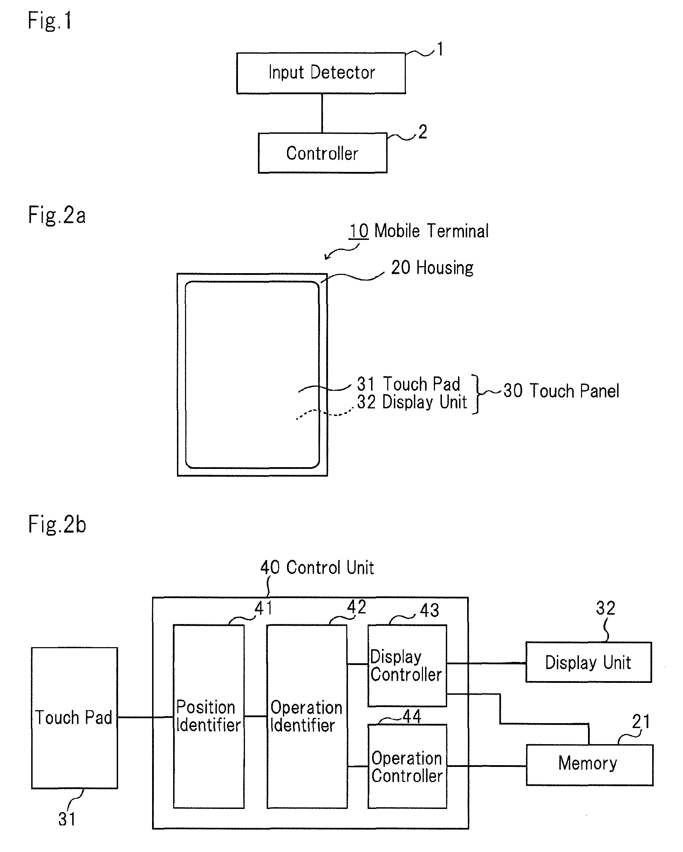

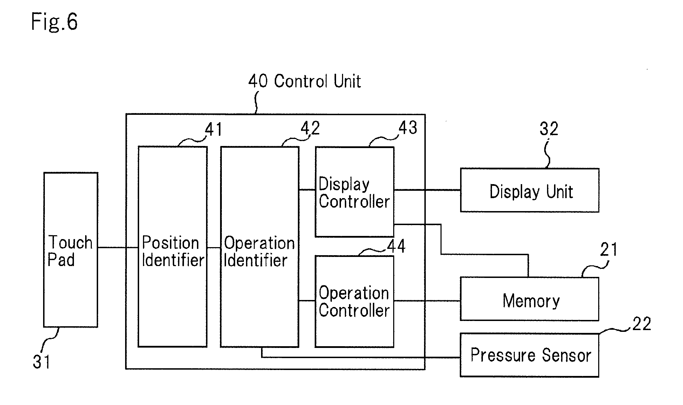

[FIG. 1]
   A diagram showing the outline of a processing device of the present invention.
[FIG. 2a]
   An appearance view of a mobile terminal as one embodiment mode of the processing device shown in FIG. 1, viewed from the front.
[FIG. 2b]
   A functional block diagram of a mobile terminal as one embodiment mode of the processing device shown in FIG. 1.
[FIG. 3]
   A flow chart for explaining the operation when the locked state of the mobile terminal shown in FIGS. 2a and 2b is released.
[FIG. 4a]
   A diagram showing one example of how the locked state of the mobile terminal shown in FIGS. 2a and 2b is being released.
[FIG. 4b]
   A diagram showing one example of how the locked state of the mobile terminal shown in FIGS. 2a and 2b is being released.
[FIG. 4c]
   A diagram showing one example of how the locked state of the mobile terminal shown in FIGS. 2a and 2b is being released.
[FIG. 4d]
   A diagram showing one example of how the locked state of the mobile terminal shown in FIGS. 2a and 2b is being released.
[FIG. 4e]
   A diagram showing one example of how the locked state of the mobile terminal shown in FIGS. 2a and 2b is being released.
[FIG. 5a]
   A diagram showing another example of how the locked state of the mobile terminal shown in FIGS. 2a and 2b is being released.
[FIG. 5b]
   A diagram showing another example of how the locked state of the mobile terminal shown in FIGS. 2a and 2b is being released.
[FIG. 5c]
   A diagram showing another example of how the locked state of the mobile terminal shown in FIGS. 2a and 2b is being released.
[FIG. 5d]
   A diagram showing another example of how the locked state of the mobile terminal shown in FIGS. 2a and 2b is being released.
[FIG. 5e]
   A diagram showing another example of how the locked state of the mobile terminal shown in FIGS. 2a and 2b is being released.
[FIG. 6]
   A functional block diagram showing another embodiment mode of the processing device shown in FIG. 1.
[FIG. 7]
   A diagram showing how the locked state of the mobile terminal shown in FIG. 6 is being released.

### Mode for Carrying Out the Invention

Next, the embodiment modes of the present invention will be described with reference to the drawings.

FIG. 1 is a diagram showing the outline of a processing device of the present invention.

As shown in FIG. 1, the processing device of the present invention includes input detector 1 as an input detecting means and controller 2 as a control means.

Input detector 1 detects the operated position by using an operating means.

Controller 2 divides input detector 1 into a plurality of regions and controls the operation of the processing device based on the changes of the operated position in the plural regions.

In the processing device configured as above, when input detector 1 detects the operated position on input detector 1 by using the operating means, controller 2 controls the operation of the processing device based on the changes of the operated position in the plural divided regions in input detector 1.

Next, the processing device configured as above is described by giving a specific example.

FIG. 2a is an appearance view of a mobile terminal as one embodiment mode of the processing device shown in FIG. 1, viewed from the front. FIG. 2b is a functional block diagram of a mobile terminal as one embodiment mode of the processing device shown in FIG. 1.

As shown in FIG. 2a, this configuration includes touch panel 30 provided on the front side of housing 20. Touch panel 30 is structured of touch pad 31 forming input detector 1 shown in FIG. 1, laid on display unit 32. Here, touch panel 30 is not limited to the structure of touch pad 31 laid on display unit 32, but may be given in the form of on-cell type or in-cell type in which touch pad 31 and display unit 32 are integrated.

Housing 20 is formed of, for example a front cover and a rear cover being fitted to each other along the periphery.

Touch pad 31 has a conductive film (not shown) on the surface thereof, and based on changes in capacitance between this conductive film and a finger or the like to act as an operating means, detects the operated position by the contact of the finger or the like. Further, as long as the touch pad can detect the position at which the finger or the like, make contact, other than the type using capacitance as above, it is possible to use a resistive film type in which resistance is detected, when two conductive films come into contact with each other, by the pressure from a finger or the like to thereby identify the position. Alternatively, the touch pad is not limited to those that detect the operated position based on the contact of a finger or the like but may be one that detects the operated position based on the approach of a finger or the like.

Display unit 32 is formed of liquid crystal, organic EL or the like, and performs a display operation to enable an input operation to be carried out by making contact with touch panel 30. Display unit 32 scrolls, enlarges and reduces the display of information in accordance with the input operation by touching touch pad 31. Touch pad 31 is placed atop display unit 32, so that display unit 32 is provided corresponding to touch pad 31.

Housing 20 incorporates control unit 40 as controller 2 shown in FIG. 1 and memory 21 as a storage means, as shown in FIG. 2b. Control unit 40 includes position identifier 41, operation identifier 42, display controller 43 and operation controller 44. Position identifier 41 identifies the operated position detected by the contact on touch pad 31. Operation identifier 42, based on the trace of the position identified by position identifier 41, identifies the input operation by the touch on touch pad 31. Display controller 43 controls display in display unit 32 in accordance with the input operation identified by operation identifier 42. In this control, display controller 43 displays display information stored in memory 21 on display unit 32. Operation controller 44, following the program stored in memory 21, controls the operation of this mobile terminal 10 in accordance with the input operation identified by operation identifier 42. Though control unit 40 includes a communication device for control of communication, audio output device, audio input device and other devices, other than the above, these items do not directly relate to the present invention, therefore description is omitted.

Now, in mobile terminal 10 configured as above, the operation when the locked state is released will be described.

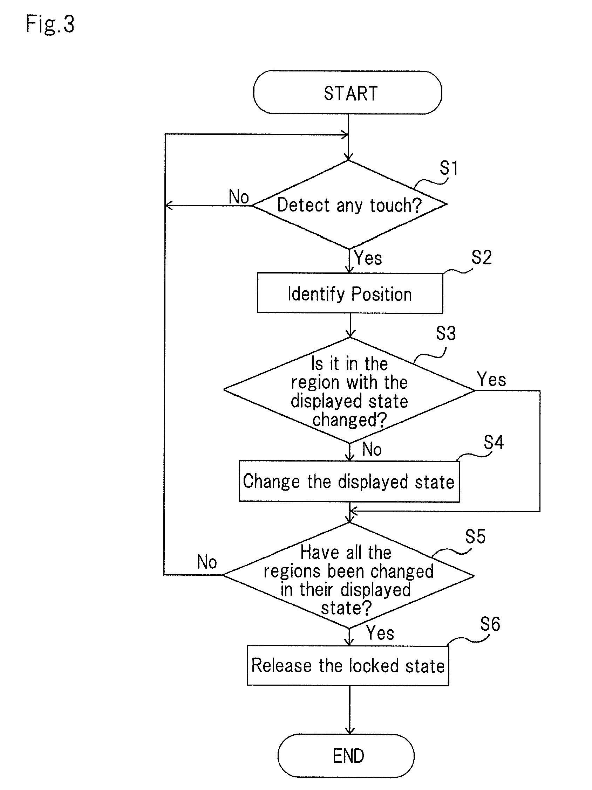

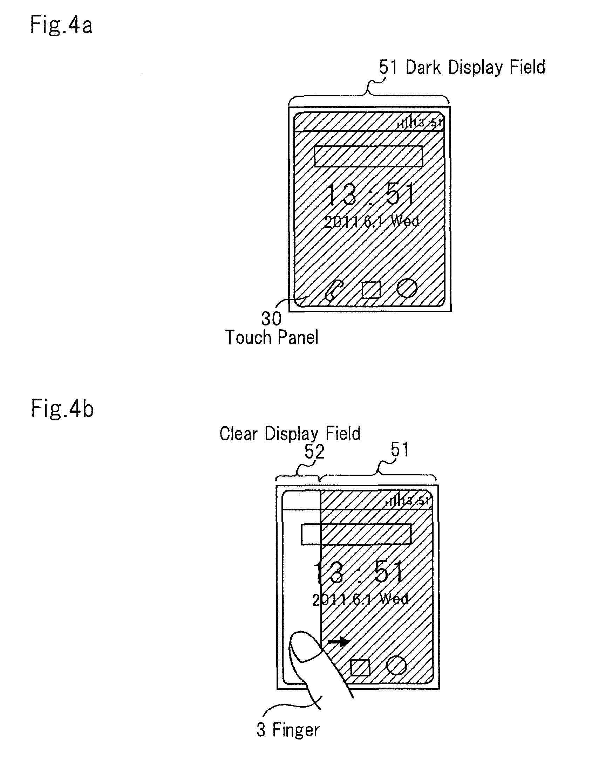

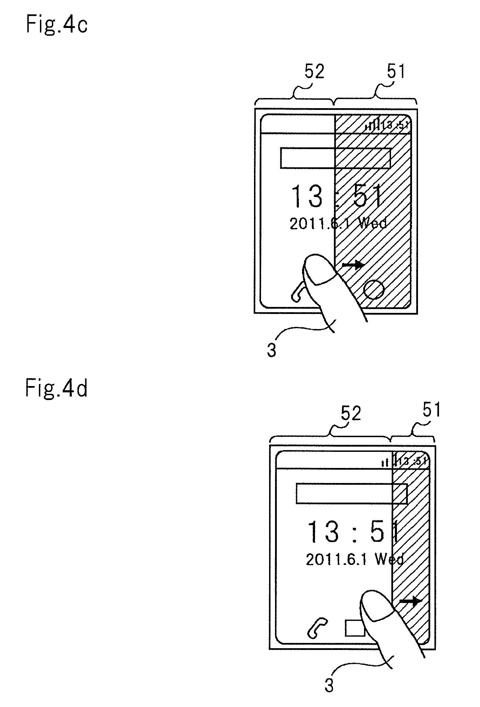

FIG. 3 is a flow chart for explaining the operation when the locked state of mobile terminal 10 shown in FIGS. 2a and 2b is released. FIGS. 4a to 4e are diagrams showing one example of how the locked state of mobile terminal 10 shown in FIGS. 2a and 2b is being released.

When mobile terminal 10 shown in FIGS. 2a and 2b which in the locked state, in which the terminal will not operate in response to an operation by a touch, displays an unlocking screen for releasing the locked state on touch panel 30 and when touch pad 31 detects a touch of a finger or the like (Step 1), touch pad 31 notifies control unit 40 that the operated position has been touched by a finger or the like. Here, in the locked state of mobile terminal 10, the entire screen of touch panel 30 is displayed with dark display field 51 as shown in FIG. 4a, under the control of display controller 43. Dark display field 51 can be realized by setting the brightness of the backlight lower than that in operation, for example. Display controller 43 causes display unit 32 to display the unlocking screen only at a predetermined time when the operating button (not shown) other than touch pad 31 is operated, so as to allow for an unlocking process while the unlocking screen is displayed on display unit 32.

In control unit 40, position identifier 41 identifies the operated position detected by touch pad 31 first (Step 2), then notifies the identified operated position to operation identifier 42.

Operation identifier 42 determines whether the operated position identified by position identifier 41 is included in the region whose display has changed from the locked to the unlocked state (Step 3). Operation identifier 42 manages touch pad 31 by dividing the entire area into plural regions for unlocking operation. For example, touch panel 30 shown in FIG. 4a to 4e is transversely divided into four regions to be managed.

When determining that the operated position identified by position identifier 41 is not included in the region whose display has changed from the locked to the unlocked state, operation identifier 42 directs display controller 43 to change the displayed state of that region.

Display controller 43, upon receiving the direction from operation identifier 42, controls display unit 32 and changes the displayed state of the directed region (Step 4). The region with its displayed state changed from the locked state is displayed with clear display field 52 that is brighter than that of the locked state, as shown in FIG. 4b. This is the brightness during operation.

Operation identifier 42 determines whether the displayed state of each region from among all the plural divided regions has been changed from the locked state (Step 5). When determining that the displayed state from among all the regions has been changed from the locked state, the operation identifier 42 gives an unlock command to release the locked state to operation controller 44.

Operation controller 44, receiving the unlock command from operation identifier 42, releases the locked state of mobile terminal 10 (Step 6).

Position identifier 41 continuously identifies the operated position detected by touch pad 31. Accordingly, there are cases where the identified operation position is included within the same divided region. For this reason, operation identifier 42 determines whether the operated position identified by position identifier 41 is included in the region whose displayed state has changed from the locked state. If the identified operated position is included in the region whose displayed state has changed from the locked state, the control goes to the process at Step 5, skipping the process at Step 4.

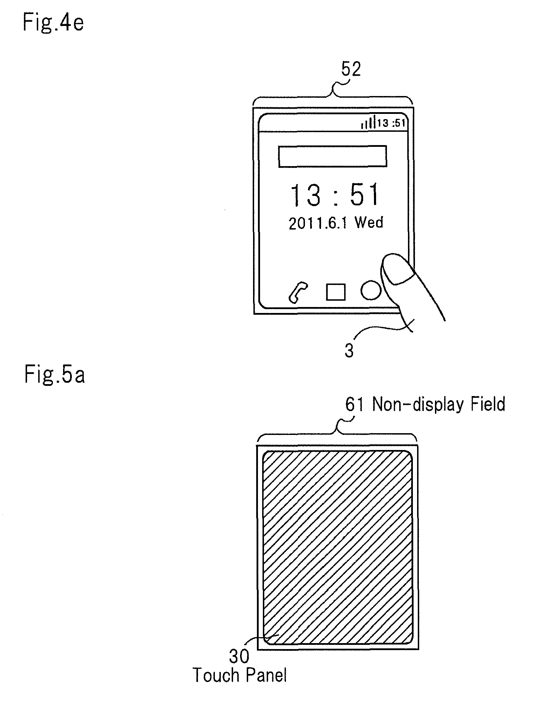

When there is a region from among all the plural divided regions that has not changed its displayed state from the locked state, the control goes to the process at Step 1, and the displayed state is changed from the locked state as the operated position of finger 3 moves as in FIGS. 4b to 4d. Then, after the display state of every region has been changed as shown FIG. 4e, the locked state of mobile terminal 10 is released. Here, it is optional whether to determine in advance the region from which the touch operation to release the locked state should be initiated.

In the above way, in this configuration, the locked state of mobile terminal 10 is continuously released by a touch operation to each of the plural divided regions on touch panel 30. During this, the displayed state is changed based on the movement of the operated position over the plural regions, namely, based on the regions having been touched, so that it is possible to identify the region that has not been touched. As a result, even if an operation by the finger or the like to release the locked state is temporarily interrupted, it is possible to identify the point in time from which the operation should be continued.

Though this embodiment mode has been described giving an example in which, in the locked state of mobile terminal 10, touch panel 30 is displayed totally with dark display field 51 that is low in brightness, and in which touch panel 30 becomes displayed with clear display field 52 that is higher in brightness than that of the locked state as the displayed state is changed from the locked state, it is also possible to provide a configuration in which the display is turned off in the locked state of mobile terminal 10.

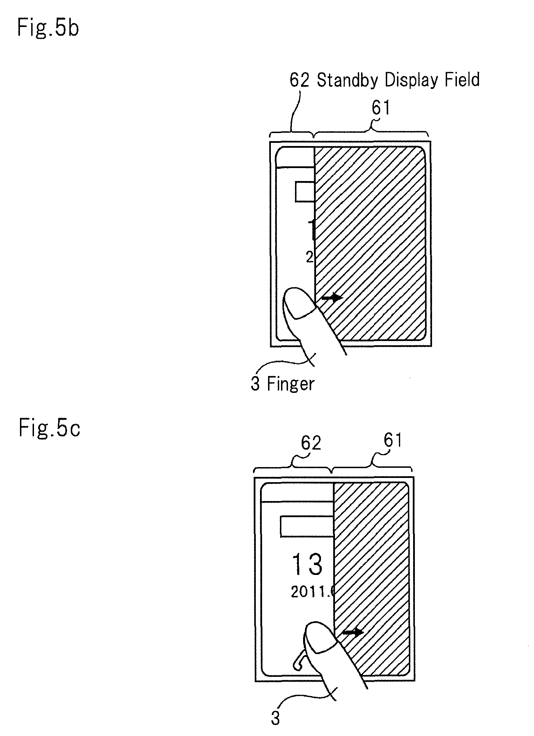

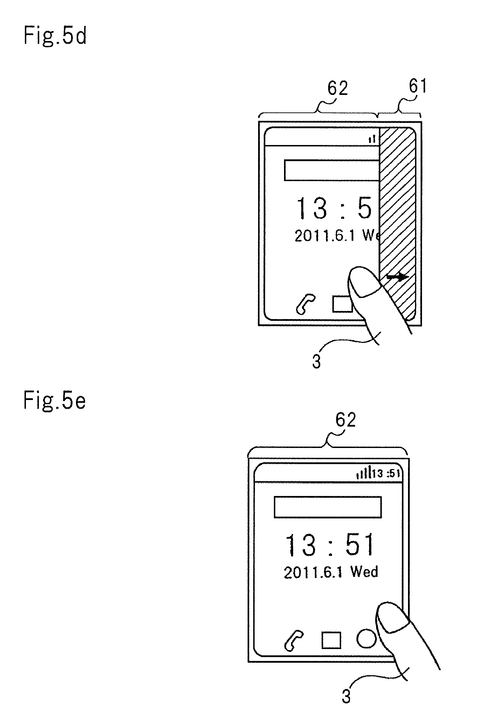

FIGS. 5a to 5e are diagrams showing another example of how the locked state of mobile terminal 10 shown in FIGS. 2a and 2b is being released.

In the locked state of mobile terminal 10 in this example, as shown in FIG. 5a the whole screen of touch panel 30 forms non-display field 61. Non-display field 61 can be realized by, for example, displaying a black image on the LCD or organic EL, or by turning off the backlight.

Thereafter, as shown in FIGS. 5b to 5e, in accordance with the operated position of finger 3 to touch panel 30 the non-display field is continuously changed into standby display field 62 with a standby screen image displayed by the control of display controller 43. During this, display controller 43 may display the display information for the standby screen image such as a wall paper etc. stored in memory 21, on display unit 32. As a result, it is possible to get along with desired operations smoothly after release of the locked state of mobile terminal 10.

Here, in the above exemplary embodiments, it is also possible to provide a configuration in which the changed displayed state is retained at a predetermined time when the displayed state of an operated region among the plural regions is changed. For example, when the operator flicks multiple regions instead of sliding finger 3 over touch panel 30 as stated above, there occurs a case where the operator misses one region in the course of flicking. In such a case, it may not be immediately regarded as an operation error, but it is possible to wait a flick on the correct region while retaining the displayed state resulting from the operation up to the point in a predetermined time.

As a result of this structure, even when the releasing operation from the locked state was missed, it is possible to restart the selecting operation from the point of time halfway in the unlocking operation, without repeating the entire procedures.

Division of touch pad 31 is not only limited to that in the transverse direction as above, but may be performed longitudinally or both longitudinally and transversally. The boundaries between multiple divided regions may be either displayed or not displayed. Further, it is not necessary to use all the divided regions of touch pad 31 to unlock, but part of the touch pad may be unused to unlock.

### (Another Embodiment Mode)

FIG. 6 is a functional block diagram showing another embodiment mode of the processing device shown in FIG. 1.

As shown in FIG. 6, this configuration is different from that shown in FIG. 2b in that pressure sensor 22 that forms a pressure sensing means is provided.

Pressure sensor 22 detects a pressing force that is acting on touch pad 31.

Control unit 40 controls the operation of mobile terminal 10 based on the detected result of pressure sensor 22 and the change of the operated position identified by position identifier 41. Specifically, operation identifier 42, instead of dividing touch pad 31 into multiple regions for unlocking management, recognizes the area in the operated position based on the pressing force detected by pressure sensor 22 to thereby continuously enlarge the changed region in the display state.

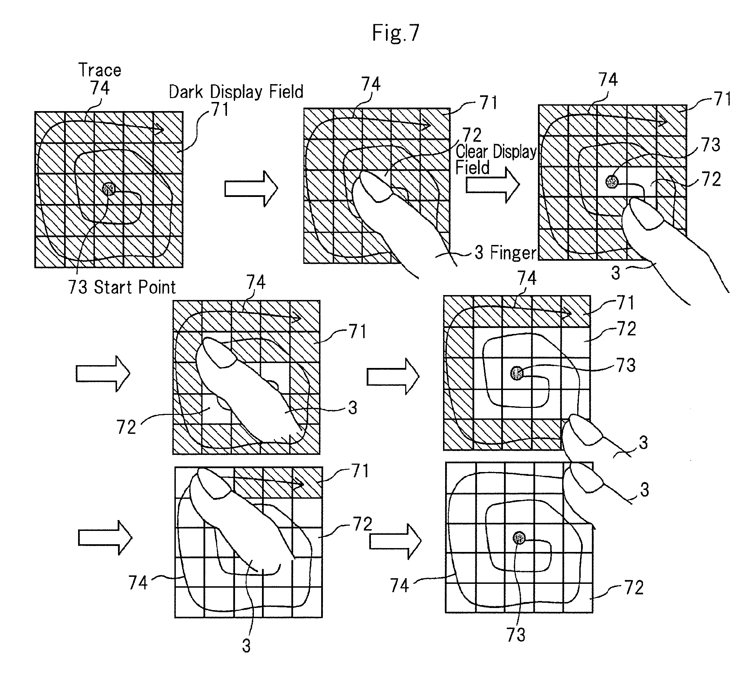

FIG. 7 is a diagram showing how the locked state of the mobile terminal shown in FIG. 6 is being released.

As shown in FIG. 7, when the region touched by finger 3 is assumed to be start point 73 and this finger 3 is moved to follow trace 74, position identifier 41 detects the position where finger 3 touches while pressure sensor 22 detects its pressing force.

Then, based on the position detected by position identifier 41 and the region of the pressing force detected by pressure sensor 22, operation identifier 42 directs display controller 43 to change the region touched by finger 3 into clear display field 72.

Display controller 43, following the direction from operation identifier 42, continuously changes the displayed state from dark display field 71 to clear display field 72.

As finger 3 traces the entire screen of touch panel 30, the entire screen of touch panel 30 turns to clear display field 72, whereby the mobile terminal is released from the locked state by the control of operation controller 44.

Here, it also possible to consider a configuration in which the greater the pressing force detected by pressure sensor 22, the shorter is the time from when finger 3 touches touch panel 30 until the time when the displayed state of the region is changed.

It is also possible to consider a configuration in which the amount of capacitance change instead of the pressing force is detected. In this case, a capacitive touch pad is used, and touch of a finger or the like is identified when the change in capacitance exceeds a predetermined level. In this case, it also possible to vary the time from when finger 3 touches touch panel 30 until the time when the displayed state of the region is changed, depending on the amount of change in capacitance.

The components of the present invention should not be limited to being separated into the functional components shown in the above block diagram, but may be separated as appropriate depending on functionality.

In the present invention, other than above-described dedicated hardware, the process in the processing device can also be performed by recording the program that realizes the functionality on a recording medium readable by a computer that serves as the processing device and making the processing device read and execute the program recorded on this recording medium. The recording mediums readable by the processing device include removable mediums such as IC cards, memory cards, floppy disks (registered trademark), magneto optical disks, DVDs, CDs, etc., and HDDs built in the processing device. The program recorded on the recording medium is loaded by, for example a control block, to execute the same process as above under the control of the control block.

The processing device used in the present invention is not limited to the mobile phone and smartphone described above, but may be a portable music player, portable game machine, tablet PC (Personal Computer), notebook PC, PDA (Personal Date Assistants), digital camera, remote control device, or the like.

Part or whole of the above exemplary embodiments can be described as the following appendixes, but the invention should not be limited to these.

### (Appendix 1)

A processing device comprising:
an input detecting means that detects an operated position by an operating means; and,
a control means that divides the input detecting means into a plurality of regions and controls the operation of the processing device based on the change of the operated position in the plural regions.

### (Appendix 2)

The processing device according to Appendix 1, further comprising a display means provided corresponding to the input detecting means, wherein
the control means changes the displayed state of an region of the display means corresponding to the region where an operation has been performed from among the plural regions.

### (Appendix 3)

The processing device according to Appendix 2, wherein
the control means causes the display means to change the brightness of a region corresponding to the region in which an operation has been performed.

### (Appendix 4)

The processing device according to Appendix 2 or 3, further comprising a storing means that stores display information, wherein
the control means causes the display means to replace the display of a region corresponding to the region in which an operation has been performed.

### (Appendix 5)

The processing device according to any one of Appendixes 2 to 4, further comprising a pressure sensing means that detects pressing force on the input detecting means, wherein
the control means controls the operation of the processing device based on the detected result from the pressure sensing means and the change of the operated position.

### (Appendix 6)

The processing device according to Appendix 5, wherein
the control means sets the time from when the operation is made until control of the operation of the processing device is started, in accordance with the strength of the pressing force detected by the pressure sensing means.

### (Appendix 7)

The processing device according to any one of Appendixes 2 to 6, wherein
when all the plural regions have been operated in a locked state of the processing device, the control means releases the locked state.

### (Appendix 8)

The processing device according to Appendix 7, wherein
the control means, when the display means changes the displayed state of a region corresponding to the region where an operation has been performed from among the plural regions, retains the changed displayed state in a predetermined time.

### (Appendix 9)

An operation control method comprising:
an input and detection step of detecting an operated position by an operating means in an input detecting means; and,
a control step of controlling the operation of the processing device based on the change of the operated position in the plural regions into which the input detecting means is divided.

### (Appendix 10)

A program that causes a computer to execute:
an input and detection step of detecting an operated position by an operating means in an input detecting means; and,
a control step of controlling the operation of the processing device based on the change of the operated position in the plural regions into which the input detecting means is divided.

Although the present invention has been explained with reference to the exemplary embodiments, the present invention should not be limited to the above exemplary embodiments. Various modifications that can be understood by those skilled in the art may be made to the structures and details of the present invention within the scope of the present invention.

This application claims priority based on Japanese Patent Application No. 2012-145208, filed on June 28, 2012, and should incorporate all the disclosure thereof herein.

## Claims

1. A processing device comprising:
an input detecting means that detects an operated position by an operating means; and,
a control means that divides the input detecting means into a plurality of regions and controls the operation of the processing device based on the change of the operated position in the plural regions.

2. The processing device according to Claim 1, further comprising a display means provided corresponding to the input detecting means, wherein
the control means changes the displayed state of an region of the display means corresponding to the region where an operation has been performed from among the plural regions.

3. The processing device according to Claim 2, wherein
the control means causes the display means to change the brightness of a region corresponding to the region in which an operation has been performed.

4. The processing device according to Claim 2 or 3, further comprising a storing means that stores display information, wherein
the control means causes the display means to replace the display of a region corresponding to the region in which an operation has been performed.

5. The processing device according to any one of Claims 2 to 4, further comprising a pressure sensing means that detects pressing force on the input detecting means, wherein
the control means controls the operation of the processing device based on the detected result from the pressure sensing means and the change of the operated position.

6. The processing device according to Claim 5, wherein
the control means sets the time from when the operation is made until control of the operation of the processing device is started, in accordance with the strength of the pressing force detected by the pressure sensing means.

7. The processing device according to any one of Claims 2 to 6, wherein
when all the plural regions have been operated in a locked state of the processing device, the control means releases the locked state.

8. The processing device according to Claim 7, wherein
the control means, when the display means changes the displayed state of a region corresponding to the region where an operation has been performed from among the plural regions, retains the changed displayed state in a predetermined time.

9. An operation control method comprising:
an input and detection step of detecting an operated position by an operating means in an input detecting means; and,
a control step of controlling the operation of the processing device based on the change of the operated position in the plural regions into which the input detecting means is divided.

10. A program that causes a computer to execute:
an input and detection step of detecting an operated position by an operating means in an input detecting means; and,
a control step of controlling the operation of the processing device based on the change of the operated position in the plural regions into which the input detecting means is divided.
